# EUROPEAN PATENT APPLICATION

(11) **EP 4 560 502 A1**
(43) Date of publication of application: **28.05.2025**
(21) Application number: 23855201.2
(22) Date of filing: 18.08.2023
(51) Int. Cl.: G06F 21/33, G06F 21/53, G06F 21/64, H04L 9/32, H04L 9/08, G06F 21/32, G06F 21/62, G06F 21/31

(54) **ELECTRONIC DEVICE AND METHOD FOR PERFORMING USER AUTHENTICATION ON ELECTRONIC DEVICE**

(30) Priority: 19.08.2022 KR 20220104364; 06.01.2023 KR 20230002384
(71) Applicant: Samsung Electronics Co., Ltd., Suwon-si, Gyeonggi-do 16677 (KR)
(72) Inventor: KIM, Taesoo, Suwon-si Gyeonggi-do 16677 (KR); KIM, Beomheyn, Suwon-si Gyeonggi-do 16677 (KR)
(74) Representative: Gulde & Partner
(86) International application number: PCT/KR2023/012302
(87) International publication number: WO 2024/039235

(57) **Abstract**

According to various embodiments, an electronic device comprises: a memory; and at least one processor connected to the memory. The at least one processor may receive a user credential through a first authentication application running in a secure area, and perform a user authentication procedure in the first authentication application in the security area on the basis of the user credential. The at least one processor may control the first authentication application in the security area to issue an access token when the user authentication procedure is successfully completed in the first authentication application within the security area. The at least one processor may transmit the access token issued by the first authentication application in the security area to an external electronic device through a second authentication application running in a non-secure area.

## Description

### [Technical Field]

The disclosure relates to a method of performing user authentication in an electronic device.

### [Background Art]

Along with the development of digital technology, various types of electronic devices such as mobile communication terminals, smart phones, tablet personal computers (PCs), and wearable devices are widely used.

An electronic device may store various data to provide various user experiences. The electronic device may manage data of one or more applications, services, and/or operating systems based on a database. For example, the electronic device may process data of the database based on an executed application, service, and/or operating system.

An electronic device such as a smartphone may process a user authentication function. For example, when the electronic device executes an application which may provide a service after user authentication, it may process the user authentication function such as keyboard input, iris recognition, and fingerprint recognition.

### [Detailed Description of the Invention]

### [Technical Problem]

The disclosure proposes a method of performing user authentication using a secure area in an electronic device.

### [Technical Solution]

According to various embodiments, means for solving the problem are not limited to the above-described means, and means for solving the problem that are not mentioned may be clearly understood by those skilled in the art from the specification and the attached drawings.

According to various embodiments, an electronic device includes memory and at least one processor connected to the memory. The at least one processor is configured to receive a user credential through a first authenticator application executed in a secure area, and control to perform a user authentication procedure in the first authenticator application in the secure area, based on the user credential, control to issue an access token in the first authenticator application in the secure area, when the user authentication procedure is successfully completed in the first authenticator application in the secure area, and control to transmit the access token issued in the first authenticator application in the secure area to an external electronic device through a second authenticator application executed in a non-secure area.

According to various embodiments, a method of operating an electronic device includes obtaining a user credential corresponding to a user input through a first authenticator application executed in a secure area, performing a user authentication procedure in the first authenticator application in the secure area, based on the user credential, issuing an access token in the first authenticator application in the secure area, when the user authentication procedure is successfully completed in the first authenticator application in the secure area, and transmitting the access token issued in the first authenticator application in the secure area to an external electronic device through a second authenticator application executed in a non-secure area.

According to an embodiment, a computer-readable storage medium storing at least one instruction is provided. When executed by at least one processor, the at least one instruction enables an electronic device to perform a plurality of operations. The plurality of operations include obtaining a user credential corresponding to a user input through a first authenticator application executed in a secure area, performing a user authentication procedure in the first authenticator application in the secure area, based on the user credential, issuing an access token in the first authenticator application in the secure area, when the user authentication procedure is successfully completed in the first authenticator application in the secure area, and transmitting the access token issued in the first authenticator application in the secure area to an external electronic device through a second authenticator application executed in a non-secure area.

### [Advantageous Effects]

An embodiment of the disclosure may control to perform secure user authentication using a secure area in an electronic device.

### [Brief Description of Drawings]

FIG. 1 is a block diagram illustrating an electronic device in a network environment according to embodiments of the disclosure.
FIG. 2 is a block diagram illustrating a program according to an embodiment of the disclosure.
FIG. 3A illustrates an example of providing a sign in function in an electronic device according to an embodiment of the disclosure.
FIG. 3B illustrates an example of providing a sign in function through passwordless authentication in an electronic device according to an embodiment of the disclosure.
FIG. 4 is a diagram illustrating a user authentication method according to an embodiment of the disclosure.
FIG. 5 is a diagram illustrating a system according to an embodiment of the disclosure.
FIG. 6 is a diagram illustrating a package structure of an authenticator application according to an embodiment of the disclosure.
FIG. 7 is a diagram illustrating the internal configuration of an electronic device in which a packaged authenticator application is executed according to an embodiment of the disclosure.
FIG. 8 is a diagram illustrating a data structure stored for credential user registration in an electronic device according to an embodiment of the disclosure.
FIG. 9 is a diagram illustrating an example for describing an on-device user authentication method according to an embodiment of the disclosure.
FIG. 10 is a diagram illustrating another example for describing an on-device user authentication method according to an embodiment of the disclosure.
FIG. 11 is a flowchart illustrating an operation of an electronic device according to an embodiment of the disclosure.

### [Mode for Carrying out the Invention]

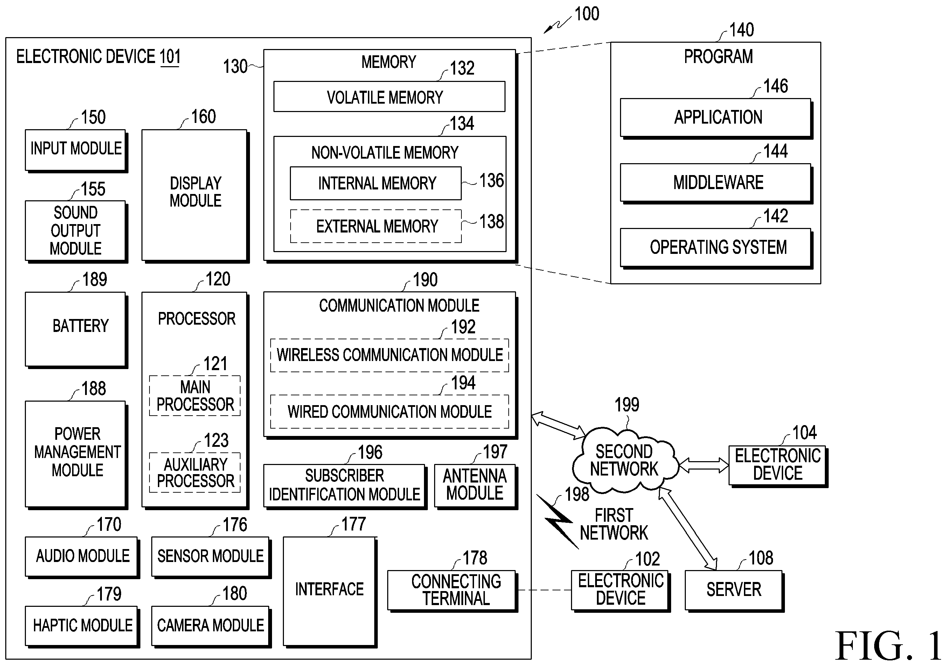

FIG. 1 is a block diagram illustrating an electronic device in a network environment according to embodiments of the disclosure.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

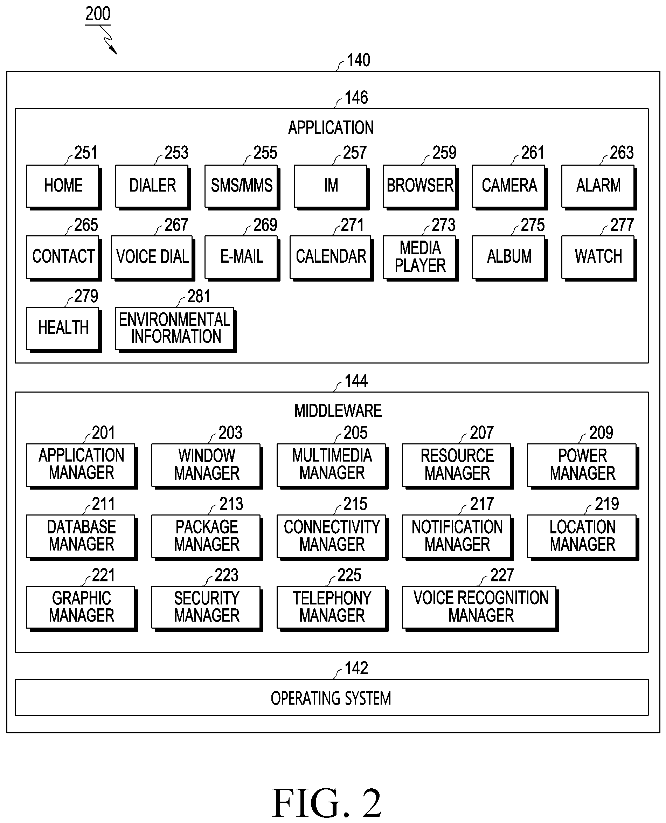

FIG. 2 is a block diagram illustrating a program according to an embodiment of the disclosure.

According to an embodiment, the program 140 may include an operating system (OS) 142 to control one or more resources of the electronic device 101, middleware 144, or an application 146 executable in the OS 142. The OS 142 may include, for example, Android^{™}, iOS^{™}, Windows^{™}, Symbian^{™}, Tizen^{™}, or Bada^{™}. At least part of the program 140, for example, may be pre-loaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130.The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., adjustment of brightness, resolution, or focus) of the external electronic device or some component thereof (e.g., a display module or a camera module of the external electronic device). The device management application, additionally or alternatively, may support installation, delete, or update of an application executed on the external electronic device.

When a server (e.g., an edge server) provides an authentication service, there is a risk of exposure of a user's credential and/or personal information at an attack against the server, since the server manages the user's credential and/or personal information and performs user authentication. For passwordless authentication, an authentication server is vulnerable to a software attack, which may limit the usability of an authentication service for a user device.

The disclosure proposes a method of protecting credential information of a user within an electronic device (e.g., the electronic device 101 of FIG. 1) rather than an external server (e.g., an edge server) and directly authenticating the user using the credential information within the electronic device.

In the disclosure, a user credential required for user login (or user authentication) may be safely stored and/or managed using a hardware-based trusted execution environment (TEE) technology. In the disclosure, a user credential-based authentication scheme may be protected by hardware technology, and the user may directly control the authentication scheme, thereby reinforcing data self-sovereign identity. An authentication scheme according to the disclosure may provide an on-device authentication function that may be protected against software attacks or phishing attacks.

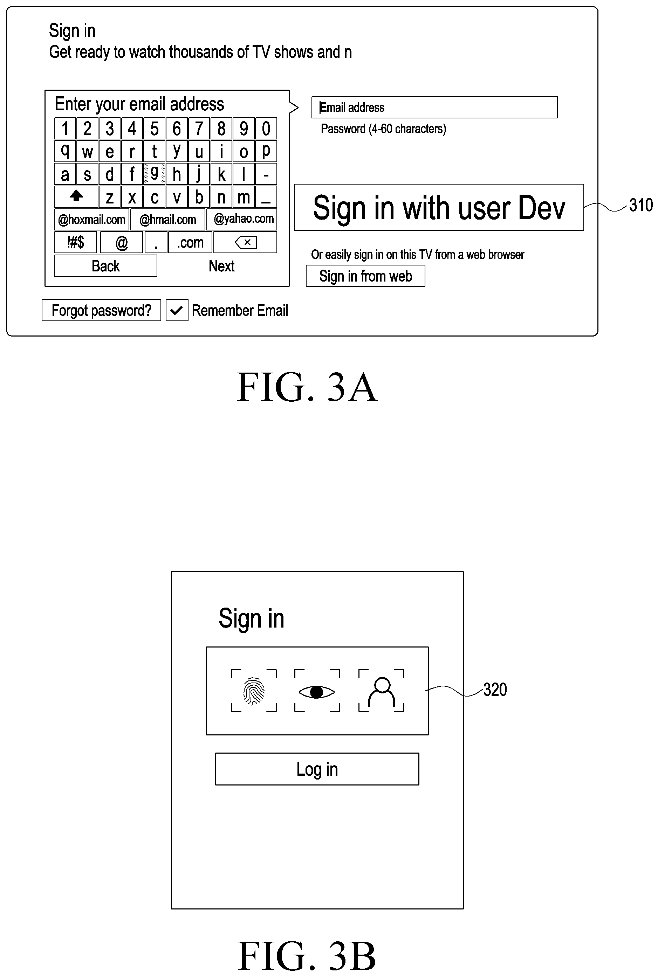

FIG. 3A illustrates an example of providing a sign in function in an electronic device according to an embodiment of the disclosure.

Referring to FIG. 3A, the electronic device (e.g., the electronic device 101 of FIG. 1) may provide a user interface (UI) to enable execution of a sign in function for the electronic device (e.g., the electronic device 101 of FIG. 1) or an external electronic device (e.g., the electronic device 102 or electronic device 104 of FIG. 1).

FIG. 3B illustrates an example of providing a sign in function through passwordless authentication in an electronic device according to an embodiment of the disclosure.

Referring to FIG. 3B, a user credential may be protected using a hardware-based TEE technology without a password in an electronic device (e.g., the electronic device 101 of FIG. 1). According to an embodiment, the user credential may be a password, fingerprint, face, voice, iris, palm, or finger vein pattern, which may identify an owner.

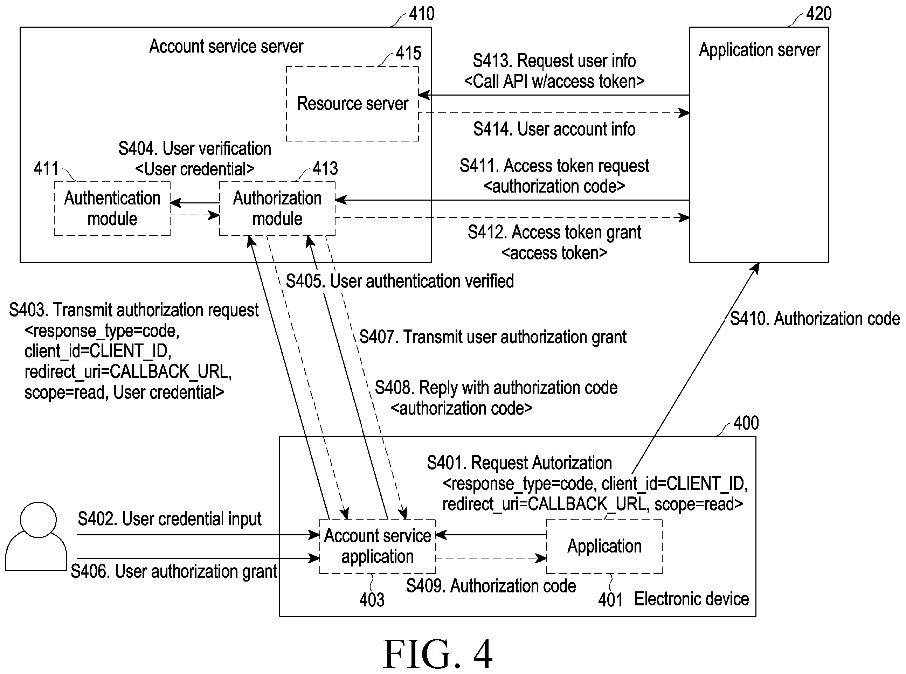

FIG. 4 is a diagram illustrating a user authentication method according to an embodiment of the disclosure.

Referring to FIG. 4, a system includes an electronic device 400 (e.g., the electronic device 101 of FIG. 1), an account service server 410, and an application server 420. The account service server 410 may manage a user account for the electronic device 400 and verify a user using a user credential. The application server 420 is a server that may provide a service and/or content to the electronic device 400, and upon receipt of an authorization code from the electronic device 400, may obtain user account information from the account service server 410.

An application 401 and an account service application 403 may be installed and/or executed on the electronic device 400. The application 401 may communicate with the application server 420 and transmit and receive data and/or information to and from it, and the account service application 403 may communicate with the account service server 410 and transmit and receive data and/or information to and from it.

The account service server 410 may include an authentication module 411 for user authentication, an authorization module 413 for issuing an authorization code so that an external server (e.g., the application server 420) may obtain user account information, and a resource server 415 for providing an access token and/or user account information to an external server (e.g., the application server 420).

The electronic device 400 may receive a user credential from a credential owner and transmit the received user credential to the account service server 410. Upon receipt of the user credential, the account service server 410 may perform user verification using the user credential, and when the user verification is completed, transmit an authorization code for the user to the electronic device 400.

In operation S401, the application 401 in the electronic device 400 may request authorization by transmitting a request authorization to the account service application 403. According to an embodiment, the request authorization may be implemented in the form of <response_type=code, client_id=CLIENT_ID, redirect_uri=CALLBACK_URL, scope=read>.

In operation S402, the account service application 403 may receive a user credential based on a user input.

In operation S403, the account service application 403 may transmit an authorization request requesting authorization to the authorization module 413 in the account service server 410. According to an embodiment, the authorization request may include the user credential. According to an embodiment, the authorization request may be implemented in the form of <response_type=code, client_id=CLIENT_ID, redirect_uri=CALLBACK_URL, scope=read, User credential>.

In operation S404, the authentication module 411 and the authorization module 413 in the account service server 410 may exchange user verification-related messages with each other. According to an embodiment, the user verification-related messages may include the user credential.

In operation S405, the authorization module 413 in the account service server 410 may transmit verified user authentication information to the account service application 403. In operation S406, the account service application 403 may receive a user authorization grant based on a user input.

In operation S407, the account service application 403 may transmit the user authorization grant to the authorization module 413 in the account service server 410. In operation S408, the authorization module 413 in the account service server 410 may transmit a response message including an authorization code (replay with authorization code <authorization code>) to the account service application 403.

In operation S409, the account service application 403 may transmit the authorization code to the application 401. In operation S410, the application 401 may transmit the authorization code to the application server 420. In operation S411, the application server 420 may transmit an access token request including the authorization code (access token request <authorization code>) to the authorization module 413 in the account service server 410.

In operation S412, the authorization module 413 in the account service server 410 may transmit an access token grant including an access token (access token grant <access token>) to the application server 420. In operation S413, the application server 420 may transmit a user information request including a Call API with an access token (Request user info <Call API w/ access token>) to the resource server 415. In operation S414, the resource server 415 may transmit user account information (user account info) to the application server 420.

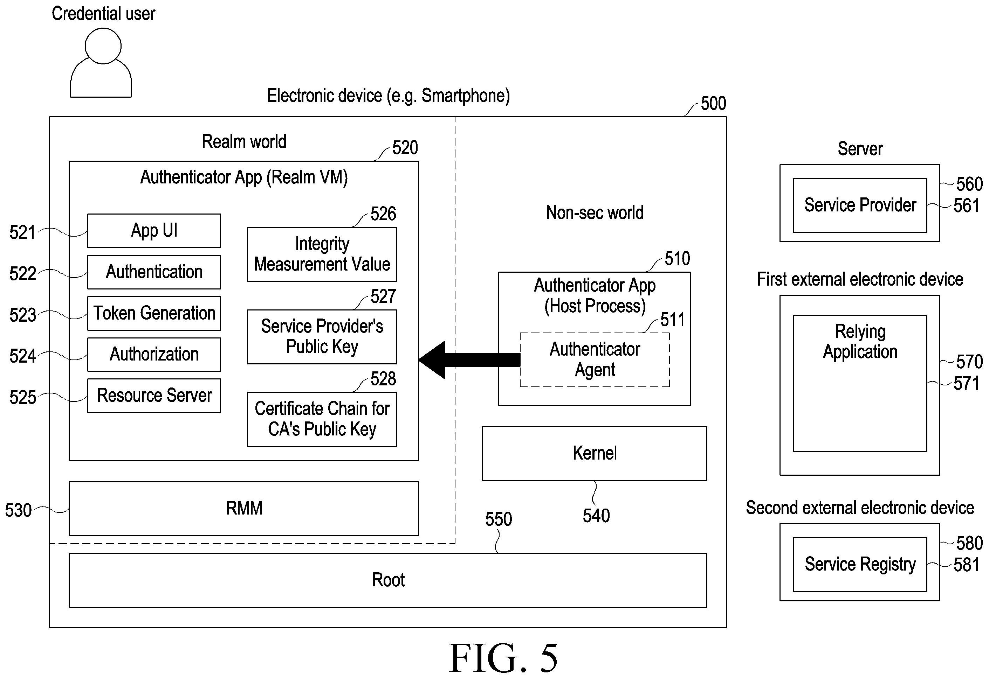

FIG. 5 is a diagram illustrating a system according to an embodiment of the disclosure.

Referring to FIG. 5, the system may include an electronic device 500 (e.g., the electronic device 101 of FIG. 1), a server 560 (e.g., the server 108 of FIG. 1), a first external electronic device 570 (e.g., the electronic device 102 of FIG. 1), and a second external electronic device 580 (e.g., the electronic device 104 of FIG. 1). Unlike the electronic device 400 of FIG. 4 that performs user authentication through an external server (e.g., the account service server 410), the electronic device 500 of FIG. 5 may have a plurality of modules therein to perform user authentication on its own.

The electronic devices 500 may include a secure area (or a realm world; or a secure world) and a non-secure area (or a non-secure world; or normal world), each executing an application and/or a service (or an application code) independently. According to an embodiment, the secure area and the non-secure area may be worlds that are separated physically (or in terms of hardware) within the electronic device 500. According to an embodiment, an application and/or service (or application code) that requires protection of a user's privacy or personal information may be executed in the secure area. For example, the non-secure area may be implemented in an Android environment (or rich execution environment (REE)), and the secure area may be implemented in a TEE physically isolated from Android.

The electronic device 500 may include an authenticator application (App) (Host Process) 510 executed for user authentication in the non-secure area, an authenticator App (Realm VM) 520 executed for user authentication in the secure area, a remote monitoring and management (RMM) 530 implemented in the secure area, a kernel 540 implemented in the non-secure area, and a root 550 implemented in the non-secure area. In the disclosure, the authenticator APPs 510 and 520 for user authentication may be executed respectively in the non-secure area and the secure area in the electronic device 500, and a user credential may be protected and/or used through the authenticator App 520 executed in the secure area inaccessible to an external device, thereby reinforcing the protection of privacy information.

The authenticator App 510 executed in the non-secure area may include an authenticator agent 511. The authenticator agent 511 may relay communication between the authenticator App 520 executed in the secure area and an external device (e.g., the server 560, the first external electronic device 570, and/or the second external electronic device 580).

The authenticator App 520 executed in the secure area may include an App UI module 521 providing a UI, an authentication module 522 performing user verification, a token generation module 523 issuing an access token, an authorization module 524, and a resource server module 525 providing user information and/or an access token to an external server. The authenticator App 520 executed in the secure area may include an integrity measurement value 526, a public key 527 of a service provider 561, and a certificate chain for a public key 528 of a certified authority (CA).

The RMM 530 is a firmware executed in the secure area, and may manage a stage page table for the secure area and a CPU context of a realm. According to an embodiment, the realm may refer to a software (SW) program executed at an exception level 0 or 1 on the RMM 530. According to an embodiment, the realm may include all of ART, shim, and application.

The server 560 may also be referred to as a remote server and be implemented as a cloud server or edge server that provides a service and/or content to the electronic device 500. The server 560 may include the service provider 561 that provides a service and/or content to the electronic device 500.

The first external electronic device 570 may be an electronic device (e.g., a TV) on which a relying application 571 is installed. The relying application 571 may request user authentication from the electronic device 500, receive an access token from the electronic device 500, and transmit the access token to the server 560. According to an embodiment, the relying application 571 may be installed and/or executed on the electronic device 500 rather than the first external electronic device 570. The second external electronic device 580 may be an electronic device (e.g., a Wi-Fi router) including a service registry 581.

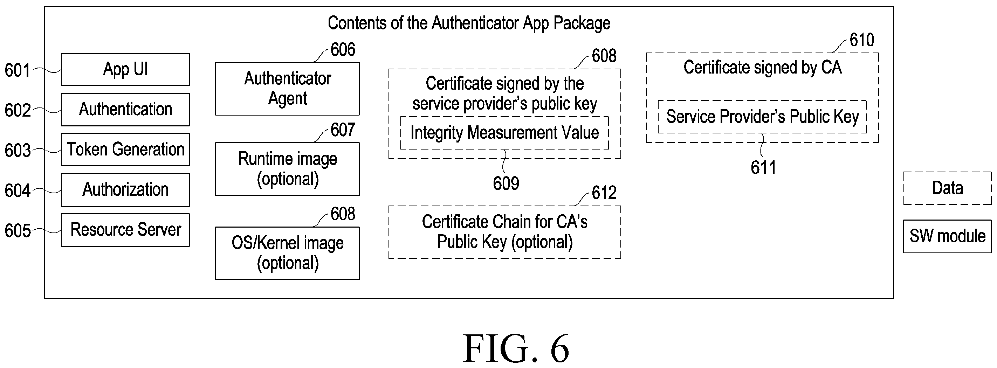

FIG. 6 is a diagram illustrating a package structure of an authenticator App according to an embodiment of the disclosure.

A package 600 of the authenticator App is packaged by a service provider (e.g., the service provider 561 of FIG. 5), and the packaged application may be uploaded to an app market and deployed to a user. A credential owner may download the authenticator App package on an electronic device (e.g., a smartphone).

Referring to FIG. 6, the package 600 of the authenticator App may include an App UI module 601, an authentication module 602, a token generation module 603, an authorization module 604, a resource server module 605, and an authenticator agent 605. According to an embodiment, the package 600 of the authenticator App may further include a runtime image module 607. According to an embodiment, the package 600 of the authenticator App may further include an OS/kernel image module 608.

The package 600 of the authenticator App may include a certificate 608 signed by a public key of a service provider (e.g., the service provider 561 of FIG. 5), and the certificate 608 may include an integrity measurement value 609. The package 600 of the authenticator App may include a certificate 610 signed by a CA, and the certificate 610 may include a public key 611 of a service provider. According to an embodiment, the package 600 of the authenticator App may further include a certificate chain 612 for a public key of the CA.

The service provider (e.g., the service provider 561 of FIG. 5) may package an authenticator App into a virtual machine image. The service provider (e.g., the service provider 561 of FIG. 5) may have metadata and a package image. In an embodiment, the service provider (e.g., the service provider 561 of FIG. 5) may have (or package) the certificate 608 including the integrity measurement value 609 of the virtual machine image for execution within the secure area including the App UI module 601, the authentication module 602, the token generation module 603, and the authorization module 604. In an embodiment, the service provider may have (or package) the runtime image 607 and the OS/kernel image 608. In an embodiment, the service provider may have (or package) the certificate including the integrity measurement value 609 of the virtual machine image for execution in the secure area including the App UI module 601, the authentication module 602, the token generation module 603, and the authorization module 604. According to an embodiment, the service provider may have (or package) the certificate including the public key of the provider, signed by a private key of the CA. According to an embodiment, the service provider may have (or package) the certificate chain 612 that may be used to obtain the public key of the CA and validate it.

According to an embodiment, the virtual machine image may be signed by a private key of the service provider (e.g., the service provider 561 of FIG. 5). In an embodiment, the application packaged by the service provider (e.g., the service provider 561 of FIG. 5) may be uploaded to an app market. A credential owner may download the authenticator App package on an electronic device (e.g., a smartphone). The integrity of an image for execution in the secure area may be verified using the certificate 908 including the integrity measurement value 609. According to an embodiment, a relying application may request an authenticator App for remote attestation in addition to the certificate and certificate chain. The validity of the certificate 608 including the integrity measurement value 609 may be verified using the certificate chain. Then, the integrity measurement value 609 may be compared with the remote attestation, and the integrity of an authenticator may be verified in the relying application.

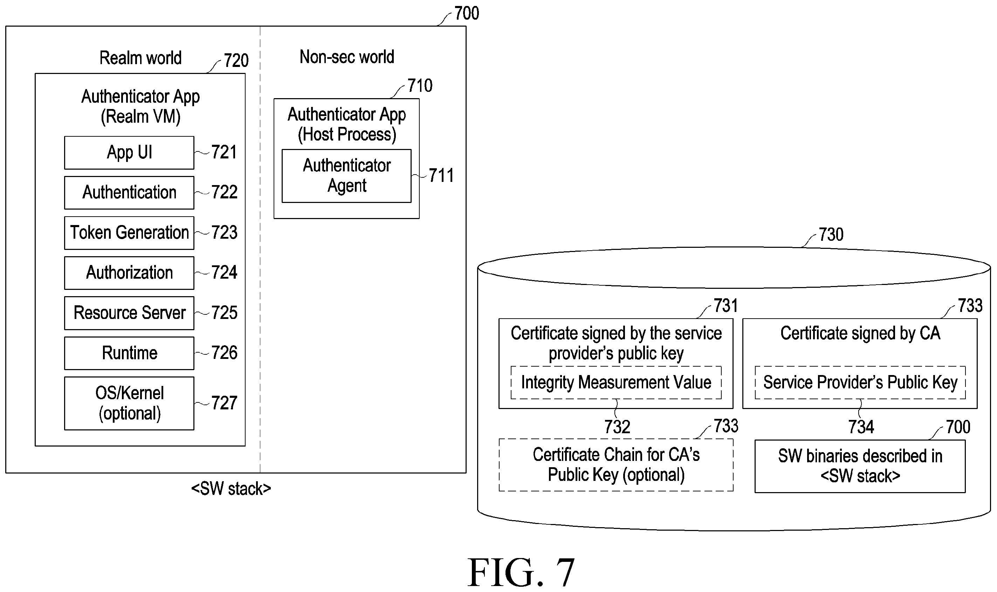

FIG. 7 is a diagram illustrating the internal configuration of an electronic device in which a packaged authenticator App is executed according to an embodiment of the disclosure.

When an authenticator App package generated by a service provider (e.g., the service provider 561 of FIG. 5) is downloaded onto an electronic device (e.g., the electronic device 500 of FIG. 5), the authenticator App may be implemented in the form of a SW stack in the electronic device.

Referring to FIG. 7, a SW stack 700 of the authenticator App may include an authenticator App 710 that may be executed in the non-secure area, and the authenticator App 710 may include an authenticator agent 711. The authenticator agent 711 may relay communication between an authenticator App 720 executed in the secure area and an external device (e.g., the server 560, the first external electronic device 570, and/or the second external electronic device 580).

The SW stack 700 of the authenticator App may include the authenticator App 720 that may be executed in the secure area, and the authenticator App 720 may include an App UI module 721, an authentication module 722, a token generation module 723, an authorization module 724, a resource server module 725, and a runtime image module 726. According to an embodiment, the authenticator App 720 that may be executed in the secure area may further include an OS/kernel image module 727.

A database or storage 730 in the electronic device may include the SW stack 700 including SW binaries, a certificate 731 signed by a public key of a service provider (e.g., the service provider 561 of FIG. 5), and a certificate signed 733 by a CA. According to an embodiment, the database or storage 730 may further include a certificate chain 733 for a public key of the CA. According to an embodiment, the certificate 731 signed by the public key of the service provider (e.g., the service provider 561 of FIG. 5) may include an integrity measurement value 732. According to an embodiment, the certificate 733 signed by the CA may include a public key 734 of a service provider.

During credential owner registration, a credential owner may first sign up and subscribe to a service. An initial sign-up procedure may be identical to an original online registration procedure for the service. In an embodiment, after the initial sign-up, the credential owner may first have to download required user data to an electronic device (e.g., a smartphone).

The credential owner may start an authenticator App. The credential owner may cause the authenticator App to start initial provisioning through a UI and a trusted I/O.

In the non-secure area (or non-secure world; or normal world), the authenticator agent 711 may connect to a remote server of the service provider. Remote attestation and verification are performed, and the authenticator App 720 in the secure area (or realm world; or secure world) and the remote server may be securely connected (through the authenticator agent 711 of the non-secure area).

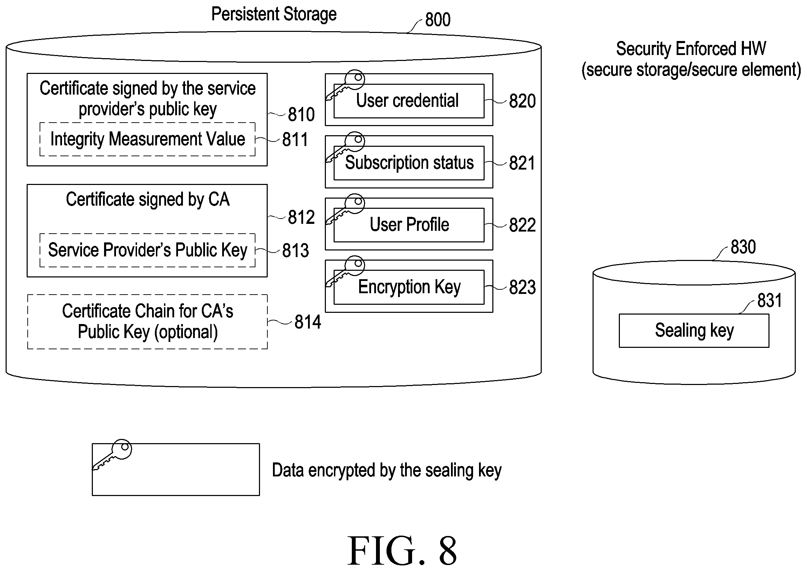

FIG. 8 is a diagram illustrating a data structure stored in an electronic device, for credential user registration, according to an embodiment of the disclosure.

Referring to FIG. 8, the electronic device may include a storage 800 and a security enforced HW 830. The storage 800 may be implemented as a persistent storage, and the security enforced HW 830 may be implemented as a secure storage or a secure element.

The storage 800 in the electronic device may include a certificate 810 signed by a public key of a service provider and a certificate 812 signed by a CA. In an embodiment, the storage 800 may further include a certificate chain 814 for a public key of the CA. According to an embodiment, the certificate 810 signed by the public key of the service provider may include an integrity measurement value 811. According to an embodiment, the certificate 812 signed by the CA may include a public key 813 of a service provider.

The storage 800 in the electronic device may include data 820 to 823 encrypted by a sealing key 831 stored in a security-enhanced HW 830. The data 820 to 823 encrypted by a sealing key 831 may include a user credential 820, a subscription status 821, a user profile 822, and an encryption key 823. According to an embodiment, the authenticator App in the secure area may download the user data including the user credential, the subscription status, the user profile, and the encryption key through a secure channel.

In the disclosure, the user credential, the subscription status, the user profile, and the encryption key may be defined as follows.
1) User credential
   This may be a password, fingerprint, face, voice, iris, palm, or finger vein pattern that may identify a credential owner, and provided to an account service provider during an initial registration process.
2) Subscription status
   Information about a subscription registered and paid for by the credential owner
3) User profile
   Personal information such as a user name, an email address, a phone number, and so on.
4) Encryption key

Shared secret information between an authenticator App generated by a service provider and a remote server of the service provider, for use in generating and validating an access token. Each generated authentication token may be signed and verified by the shared secret information.

According to an embodiment, an authenticator App may seal provisioned data. According to an embodiment, the authenticator App may safely store confidential data in a persistent storage using a standard technique in the trusted computing field. According to an embodiment, user data may be encrypted with an encryption key generated directly by an authenticator, and the key may be stored in hardware. Since the stored key may only be obtained by the authenticator, only the authenticator may decrypt the user data.

The authenticator App may generate a sealing key to encrypt the provisioned data. According to an embodiment, the sealing key may be a different encryption key from one provisioned by the service provider. The authenticator App may encrypt the provisioned user data using the sealing key generated for the user data.

The authenticator App may store the encrypted user data in an on-device persistent storage and store the sealing key in hardware enforced security. Since the sealing key may only be retrieved by the authenticator, only the authenticator App may decrypt the user data. Only the authenticator App may unseal the user data.

According to an embodiment, a client secret registration procedure of a relying application may be performed in 1) to 3) below.
1) A credential owner may download a relying application on another electronic device (or user device) in which a service is to be used (after authentication through an authenticator App).
2) The relying application may be connected to a server (or remote server) through a secure channel, after remote attestation and verification.
3) The relying application may download a client secret from the server (or remote server) of a service provider. According to an embodiment, the client secret may be considered as already registered to the server in terms of authentication. According to an embodiment, the operation 3) may be performed based on the client secret registration procedure of OAuth 2.0.

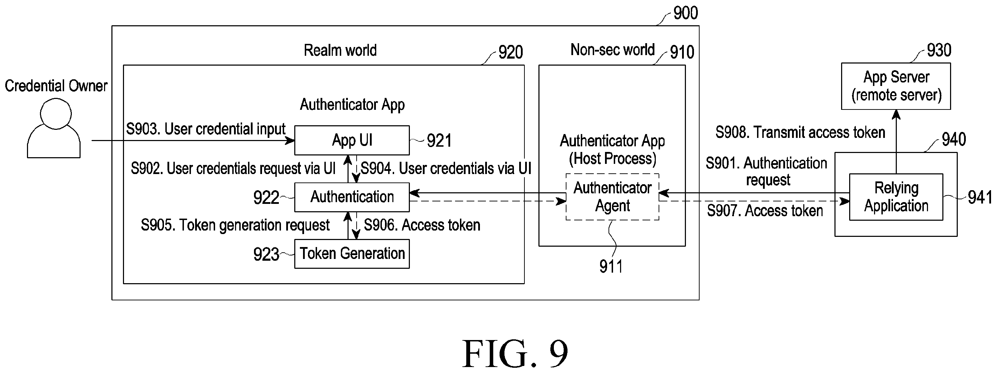

FIG. 9 is a diagram illustrating an example for describing an on-device user authentication method according to an embodiment of the disclosure.

Referring to FIG. 9, a system may include an electronic device 900, a server 930, and an external electronic device 940.

The electronic device 900 may include a secure area ( or realm world; or secure world) and a non-secure area (or non-secure world; or normal world) in each of which an application and/or service (or application code) may be executed independently. According to an embodiment, the secure area and the non-secure area may be worlds separated physically (or in terms of hardware) in the electronic device 900. According to an embodiment, an application and/or service (or application code) requiring protection of a user's privacy or personal information may be executed in the secure area. For example, the non-secure area may be implemented in an Android environment or REE, and the secure area may be implemented in a TEE physically isolated from Android.

The electronic device 900 may include an authenticator App (Host Process) 910 executed in the non-secure area, and an authenticator App 920 executed in the secure area. The authenticator App 910 executed in the non-secure area may include an authenticator agent 911. The authenticator App 920 executed in the secure area may include an App UI module 921, an authentication module 922, and a token generation module 923.

The server 930 may also be referred to as a remote server or an app server and implemented as a cloud server or edge server that provides a service and/or content to the electronic device 900.

An external electronic device 940 may be an electronic device (e.g., a TV) on which a relying application 941 is installed. According to an embodiment, the relying application 941 may be installed and/or executed on the electronic device 900 rather than the external electronic device 940.

Referring to FIG. 9, in operation S901, the relying application 941 may transmit an authentication request message to the authenticator agent 911. In operation 902, the App UI module 921 may receive a user credentials request via a UI. In operation 903, the App UI module 921 may receive a user credential input from a credential owner.

In operation 904, the App UI module 921 may transmit user credentials via the UI to the authentication module 922. In operation 905, the authentication module 922 may transmit a token generation request to the token generation module 923. In operation 906, the token generation module 923 may transmit an access token to the authentication module 922 in response to the token generation request. In an embodiment, the authentication module 922 may transmit the access token to the authenticator agent 911 in the non-secure area.

In operation 907, the authenticator agent 911 in the non-secure area may transmit the access token to the relying application 941 in the external electronic device 940. In operation 908, the relying application 941 may transmit the access token to the server 930.

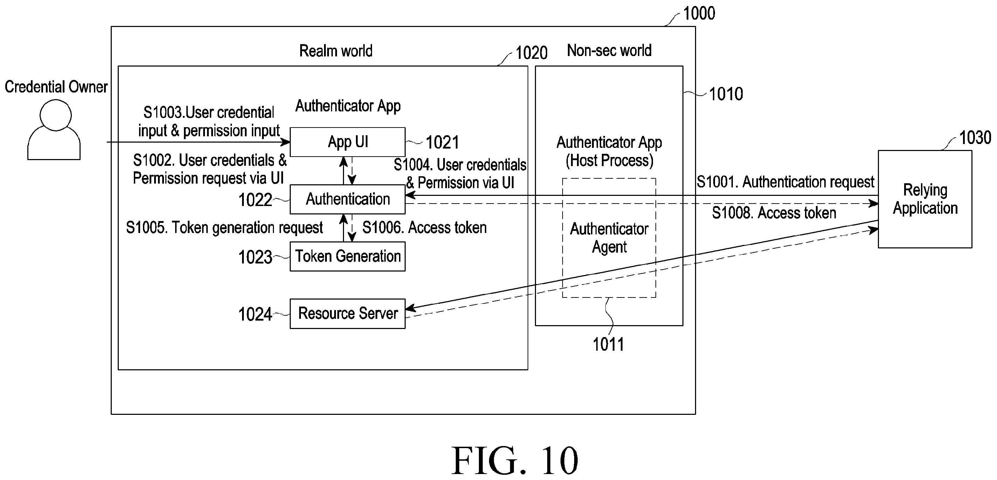

FIG. 10 is a diagram illustrating another example for describing an on-device user authentication method according to an embodiment of the disclosure.

Referring to FIG. 10, a system may include an electronic device 1000 and a relying application 1030. The electronic device 1000 may include a secure area (or realm world; or secure world) and a non-secure area (or non-secure world; or normal world) in each of which an application and/or service (or application code) may be independently executed. According to an embodiment, the secure area and the non-secure area may be worlds separated physically (or in terms of hardware) in the electronic device 1000. According to an embodiment, an application and/or service (or application code) requiring protection of a user's privacy or personal information may be executed in the secure area. For example, the non-secure area may be implemented in an Android environment or REE, and the secure area may be implemented in a TEE physically isolated from Android.

The electronic device 1000 may include an authenticator App (Host Process) 1010 executed in the non-secure area, and an authenticator App 1020 executed in the secure area. The authenticator App 1010 executed in the non-secure area may include an authenticator agent 1011. The authenticator App 1020 executed in the secure area may include an App UI module 1021, an authentication module 1022, a token generation module 1023, and a resource server 1024.

The relying application 1030 may be installed and/or executed on an external electronic device. According to an embodiment, the relying application 1030 may be installed and/or executed on the electronic device 1000.

Referring to FIG. 10, in operation S1001, the relying application 1030 may transmit an access token request to the authentication module 1022 in the secure area through the authenticator agent 1011 in the non-secure area.

In operation S1002, the App UI module 1021 in the secure area may request a user credentials and permission request via a UI. In operation S1003, the App UI module 1021 may receive a user credential input and a permission input from a credential owner.

In operation S1004, the App UI module 1021 may transmit user credentials and a permission via the UI to the authentication module 1022. In operation S1005, the authentication module 1022 may transmit a token generation request to the token generation module 1023. In operation S1006, the token generation module 1023 may transmit an access token to the authentication module 1022 in response to the token generation request. In operation S1008, the resource server 1024 may transmit the access token to the relying application 1030 through the authenticator agent 1011.

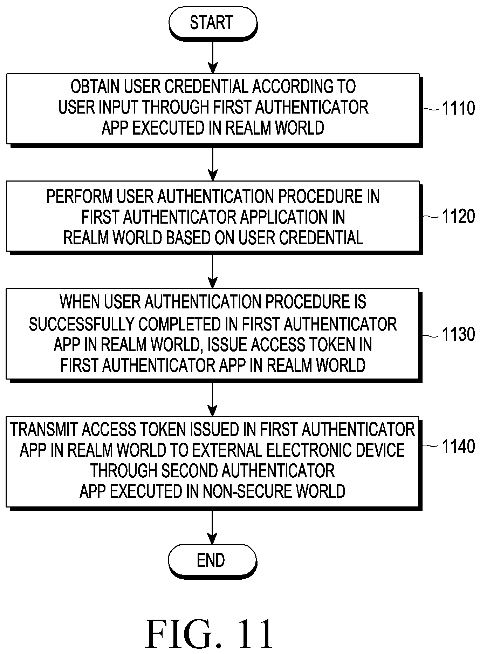

FIG. 11 is a flowchart illustrating an operation of an electronic device according to an embodiment of the disclosure.

Referring to FIG. 11, in operation 1110, an electronic device (e.g., the electronic device 101 of FIG. 1 or the electronic device 500 of FIG. 5) may obtain a user credential corresponding to a user input through a first authenticator App (the authenticator App 520 of FIG. 5) executed in a secure area. In operation 1120, the electronic device may perform a user authentication procedure in the first authenticator App in the secure area based on the user credential. In operation 1130, when the user authentication procedure is successfully completed in the first authenticator App in the secure area, the electronic device may issue an access token in the first authenticator App in the secure area. In operation 1140, the electronic device may transmit the access token issued in the first authenticator App in the secure area to an external electronic device through a second authenticator App (the authenticator App 510 of FIG. 5) executed in a non-secure area.

According to an embodiment, the non-secure area may be implemented in a REE, and the secure area may be implemented in a TEE. According to an embodiment, the electronic device may receive an authentication request message from an external electronic device through the second authenticator App in the non-secure area.

According to an embodiment, the first authenticator App in the secure area may include at least one of an integrity measurement value, a public key of a service provider, or a certificate chain for a public key of a CA. According to an embodiment, the electronic device may further include an RMM which is implemented in the secure area, manages a stage page table for the secure area, and manages a CPU context of a realm.

According to an embodiment, the memory may include a first storage and a second storage. The first storage may include a sealing key. The second storage may include a user credential, a subscription status, a user profile, and an encryption key, which are encrypted based on the sealing key.

According to an embodiment, the first authenticator App in the secure area may include an App UI module providing a UI, an authentication module performing the user authentication procedure, a token generation module issuing the access token, and a resource server module transmitting user information and the access token to an external server. According to an embodiment, the user credential may include at least one of a password, a fingerprint, a face, voice, an iris, a palm, or a finger vein pattern, which may identify an owner of the user credential.

## Claims

1. An electronic device (the electronic device 101 of FIG. 1; the electronic device 500 of FIG. 5) comprising:
memory (the memory 130 of FIG. 1); and
at least one processor (the processor 120 of FIG. 1) connected to the memory,
wherein the at least one processor is configured to control to:
receive a user credential through a first authenticator application (the authenticator App 520 of FIG. 5) executed in a secure area, and perform a user authentication procedure in the first authenticator application in the secure area, based on the user credential,
when the user authentication procedure is successfully completed in the first authenticator application in the secure area, control to issue an access token in the first authenticator application in the secure area, and
transmit the access token issued in the first authenticator application in the secure area to an external electronic device through a second authenticator application (the authenticator App 510 of FIG. 5) executed in a non-secure area.

2. The electronic device of claim 1, wherein the non-secure area is implemented in a rich execution environment (REE), and the secure area is implemented in a trusted execution environment (TEE).

3. The electronic device of claim 1 or 2, wherein the at least one processor is configured to receive an authentication request message from the external electronic device through the second authenticator application in the non-secure area.

4. The electronic device of any one of claims 1 to 3, wherein the first authenticator application in the secure area includes at least one of an integrity measurement value, a public key of a service provider, or a certificate chain for a public key of a certified authority (CA).

5. The electronic device of any one of claims 1 to 4, further comprising a remote monitoring and management (RMM) implemented in the secure area, configured to manage a stage page table for the secure area, and manage a CPU context of a realm.

6. The electronic device of any one of claims 1 to 5, wherein the memory includes a first storage and a second storage,
wherein the first storage includes a sealing key, and
wherein the second storage includes a user credential, a subscription status, a user profile, and an encryption key, encrypted based on the sealing key.

7. The electronic device of any one of claims 1 to 6, wherein the first authenticator application in the secure area includes:
an App user interface (UI) module configured to provide a UI;
an authentication module configured to perform the user authentication procedure;
a token generation module configured to issue the access token; and
a resource server module configured to transmit user information and the access token to an external server.

8. The electronic device of any one of claims 1 to 7, wherein the user credential includes at least one of a password, a fingerprint, a face, voice, an iris, a palm, or a finger vein pattern, identifying an owner of the user credential.

9. A method of operating an electronic device (the electronic device 101 of FIG. 1; the electronic device 500 of FIG. 5), comprising:
obtaining a user credential corresponding to a user input through a first authenticator application (the authenticator App 520 of FIG. 5) executed in a secure area;
performing a user authentication procedure in the first authenticator application in the secure area, based on the user credential;
when the user authentication procedure is successfully completed in the first authenticator application in the secure area, issuing an access token in the first authenticator application in the secure area; and
transmitting the access token issued in the first authenticator application in the secure area to an external electronic device through a second authenticator application (the authenticator App 510 of FIG. 5) executed in a non-secure area.

10. The method of claim 9, wherein the non-secure area is implemented in a rich execution environment (REE), and the secure area is implemented in a trusted execution environment (TEE).

11. The method of claim 9 or 10, further comprising receiving an authentication request message from the external electronic device through the second authenticator application in the non-secure area.

12. The method of any one of claims 9 to 11, wherein the first authenticator application in the secure area includes at least one of an integrity measurement value, a public key of a service provider, or a certificate chain for a public key of a certified authority (CA).

13. The method of any one of claims 9 to 12, wherein the electronic device further includes a remote monitoring and management (RMM) implemented in the secure area, managing a stage page table for the secure area, and managing a CPU context of a realm.

14. The method of any one of claims 9 to 13, wherein the memory includes a first storage and a second storage,
wherein the first storage includes a sealing key, and
wherein the second storage includes a user credential, a subscription status, a user profile, and an encryption key, encrypted based on the sealing key.

15. The method of any one of claims 9 to 14, wherein the first authenticator application in the secure area includes:
an App user interface (UI) module configured to provide a UI;
an authentication module configured to perform the user authentication procedure;
a token generation module configured to issue the access token; and
a resource server module configured to transmit user information and the access token to an external server.
